# EUROPEAN PATENT SPECIFICATION

(11) **EP 3 111 060 B1**
(45) Date of publication and mention of the grant of the patent: **18.04.2018**
(21) Application number: 15706260.5
(22) Date of filing: 03.02.2015
(51) Int. Cl.: F01L 1/14, F01L 9/02, F02B 19/10, F02M 21/02

(54) **PRECHAMBER ARRANGEMENT**
VORKAMMERANORDNUNG
AGENCEMENT DE PRÉCHAMBRE

(30) Priority: 21.02.2014 FI 20145173
(43) Date of publication of application: 04.01.2017
(73) Proprietor: Wärtsilä Finland Oy, 65380 Vaasa (FI)
(72) Inventor: MONNET, Gilles, FI-65100 Vaasa (FI)
(74) Representative: Berggren Oy, Helsinki & Oulu
(86) International application number: PCT/FI2015/050070
(87) International publication number: WO 2015/124829

(56) References cited:
- EP-B1- 2 097 629
- WO-A1-2011/004059
- JP-A- 2010 265 836
- US-A1- 2013 220 269

## Description

### Technical field of the invention

The present invention relates to a prechamber arrangement for a piston engine in accordance with the preamble of claim 1.

### Background of the invention

When a mixture of fuel and air is combusted in a combustion engine, nitrogen oxides (NOₓ) are formed. Typically, the amount of nitrogen oxides increases concurrently with the rise of combustion temperature. High peak combustion temperatures, in particular, increase the formation of nitrogen oxides. Peak combustion temperatures may be lowered and thereby the amount of nitrogen oxides formed during the combustion process decreased by increasing the air/fuel ratio of the fuel mixture, i.e. by using a leaner fuel mixture. Because of the lean fuel mixture the combustion may, however, be incomplete especially in piston engines, in which the cylinder diameter is large.

In order to improve the combustion efficiency some lean burn engines are provided with a prechamber, which is in fluid communication with the combustion chamber of the cylinder. The prechamber is supplied with a richer fuel mixture, which is ignited and conveyed to the combustion chamber, whereby the leaner fuel mixture in the combustion chamber will be ignited. Prechambers are used especially in lean burn Otto-cycle engines using gaseous fuel. In this kind of engines, the prechamber is provided with a spark plug by which the richer fuel mixture is ignited. The supply of the fuel into the prechamber is controlled by a prechamber valve.

The engine can be provided with a separate actuating mechanism for the prechamber valve. However, such a system is complex, and because of the small lift of the prechamber valve, an accurate control of the prechamber valve is difficult to achieve. These problems can be solved by providing the prechamber valve with a partly hydraulic actuating arrangement, where a piston, which pressurizes hydraulic fluid for opening the prechamber valve, is operated by the same actuating arrangement as the intake valves of the same cylinder. Such a system is disclosed in patent EP 2097629 B1. This kind of system works well in an engine, where the closing timing of the intake valves is fixed. However, if the engine is provided with variable intake valve closing (VIC), problems may arise. Some VIC arrangements are disclosed in patent applications WO 2011/004059 A1 and WO 2011/135162 A1. In these arrangements, each intake valve is opened by a cam in a conventional manner. When the intake valve opens, hydraulic fluid can be introduced into a chamber. By preventing outflow from the chamber, the closing of the intake valve can be delayed. The cam follower is all the time engaged with the cam, but the intake valve is kept open until the hydraulic fluid is released from the chamber. The chamber is typically arranged between the cam and a rocker arm.

The arrangement of EP 2097629 B1 is provided with a yoke, of which movements control the opening and closing of both the intake valve and the prechamber valve. Therefore, if a hydraulic VIC arrangement, such as an arrangement described in one of the above mentioned patent applications, is arranged between the cam that controls the opening of the intake valve and the yoke, when the closing of the intake valve is delayed, also the closing of the prechamber valve is delayed. The closing timing of the prechamber valve is thus dependent on the closing timing of the intake valve. As a consequence, the mixture in the prechamber may become too rich, when the closing of the intake valve is delayed.

### Summary of the invention

An object of the present invention is to provide an improved prechamber arrangement. The characterizing features of the prechamber arrangement according to the invention are given in the characterizing part of claim 1.

The prechamber arrangement according to the invention comprises a prechamber, a prechamber valve for opening and closing fluid communication between a fuel duct and the prechamber, a first chamber, a first piston, which is arranged in the first chamber and comprises a piston surface delimiting the first chamber, the first piston being in mechanical connection with the prechamber valve for moving the prechamber valve in the opening direction of the valve when hydraulic pressure is applied on the piston surface of the first piston, and a second piston, which is movable and comprises a piston surface for pressurizing pressure medium and for applying the hydraulic pressure of the pressure medium on the piston surface of the first piston. The prechamber arrangement is provided with a pressure releasing channel, which is configured to release pressure from the first chamber for allowing closing of the prechamber valve when the second piston is in a certain predetermined position.

With the arrangement according to the invention, pressure can be released from the first chamber before the second piston has returned after a pressurizing stroke to a position, in which the pressure in the first chamber starts to rise. This is advantageous especially in engines, which are provided with a VIC arrangement and the prechamber valve is controlled by the same cam as an intake valve. The prechamber valve can have timing which does not depend on whether the delay function of the intake valve is in use or not.

According to an embodiment of the invention, the pressure releasing channel is arranged in the second piston. For instance, the pressure releasing channel can be arranged inside the second piston and have a first end opening onto the piston surface and a second end opening onto a cylindrical outer surface of the second piston.

The second piston can be arranged in a second chamber, which is in fluid communication with the first chamber and has a first end, from which the second piston protrudes into the second chamber, and a second end. This allows that the first and the second piston have different diameters.

The prechamber arrangement can be provided with a duct having an opening in the wall of the second chamber at such a location between the first end and the second end that the second piston covers the opening at least when the piston is at the second end of the second chamber. If the opening is also at such a distance from the first end that the opening is not covered by the second piston when the piston is at the first end of the second chamber, the whole moving range of the second piston is not used for pressurizing the pressure medium, and the prechamber valve opens later than the intake valve. The pressure releasing channel can be configured to release the pressure from the first chamber through the opening of the duct.

According to an embodiment of the invention, the pressure releasing channel is configured to release the pressure from the first chamber when the second piston is at the end of the stroke that pressurizes the pressure medium.

The arrangement can comprise a cam arranged on a camshaft for controlling the movement of the second piston at least in the moving direction, in which the pressure medium is pressurized. The cam can be an intake cam. The timing of the pressure release from the first chamber can be adjustable.

### Brief description of the drawings

Embodiments of the invention are described below in more detail with reference to the accompanying drawings, in which
Fig. 1 shows a schematic view of a piston engine,
Fig. 2 shows a schematic cross-sectional view of a cylinder head with a prechamber arrangement,
Fig. 3 shows an example of a VIC arrangement, and
Fig. 4 shows a piston of a prechamber arrangement according to an embodiment of the invention.

### Description of embodiments of the invention

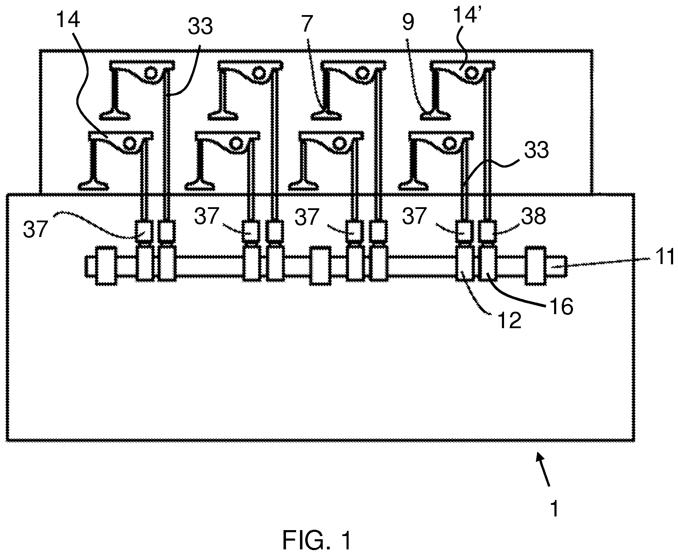

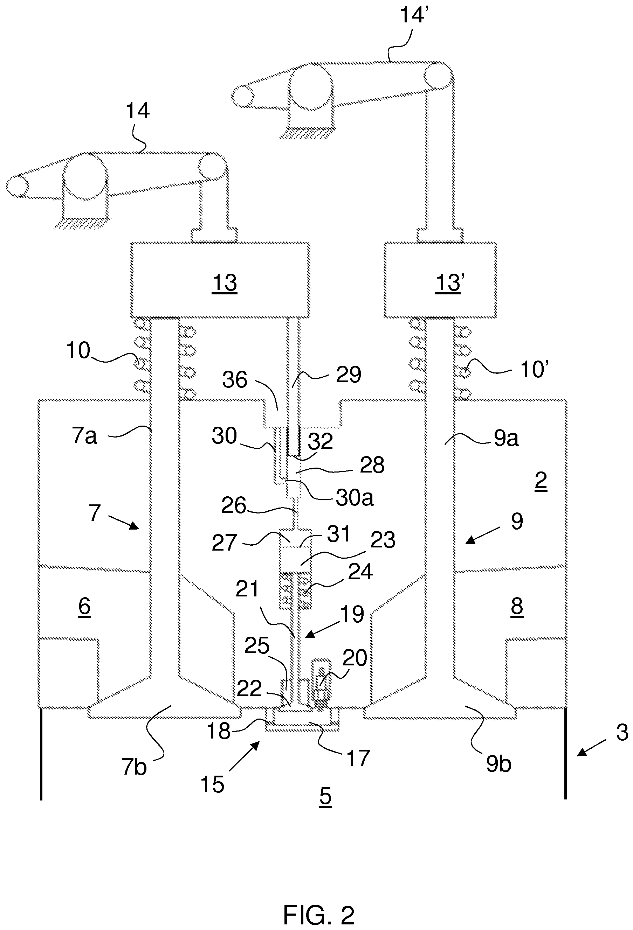

Figure 1 shows schematically a piston engine 1. The engine 1 is a large internal combustion engine, such as a main or an auxiliary engine of a ship or an engine that is used at a power plant for producing electricity. The engine 1 comprises an engine block with a plurality of cylinders. In the engine 1 of figure 1, there are four cylinders, but the engine 1 can comprise any reasonable number of cylinders, which can be arranged, for instance, in line or in a V-configuration. The engine 1 is an Otto-cycle engine, i.e. an engine where a mixture of fuel and combustion air is ignited by a spark plug. The fuel used in the engine 1 is gas, for instance natural gas. Figure 2 shows a part of the upper part of one of the cylinders 3 of the engine 1. The engine 1 also comprises a cylinder head 2 for each cylinder 3, which together with a piston and a cylinder liner defines a combustion chamber 5 of the cylinder 3. The cylinder head 2 is provided with an intake port 6 which opens into the combustion chamber 5, through which intake port 6 the mixture of fuel and air is led into the combustion chamber 5. The fuel is mixed with combustion air in the intake port 6. The flow of the mixture of fuel and combustion air from the intake port 6 into the combustion chamber 5 is controlled by at least one intake valve 7. Preferably, each cylinder 3 is provided with two intake valves 7. The cylinder head 2 is also provided with an exhaust port 8 opening into the combustion chamber 5, through which exhaust port 8 the exhaust gases formed during the combustion are discharged from the combustion chamber 5. The exhaust gas flow from the combustion chamber 5 to the exhaust port 8 is controlled by at least one exhaust valve 9. Preferably, each cylinder 3 is provided with two exhaust valves 9.

A valve actuating arrangement is provided for both the intake valve 7 and the exhaust valve 9 for moving the valves 7, 9 and opening and closing fluid communication between the combustion chamber 5 and the intake port 6 or the exhaust port 8. The actuating arrangement for the intake valve 7 comprises a yoke 13 and a rocker arm 14. The yoke 13 is mechanically connected to the stem 7a of the intake valve 7. When the rocker arm 14 is rotated around its axis, the yoke 13 and thereby the intake valve 7 is pressed downwards in order to open the intake valve 7. Similarly, the actuating arrangement for the exhaust valve 9 comprises a yoke 13' and a rocker arm 14'. The yoke 13' is mechanically connected to the stem 9a of the exhaust valve 9. When the rocker arm 14' is rotated around its axis, the yoke 13' and thereby the exhaust valve 9 is pressed downwards in order to open the exhaust valve 9. The engine 1 is provided with a camshaft 11, which comprises an intake cam 12 and an exhaust cam 16 for each cylinder 3 of the engine 1. A push rod 33 is arranged between each cam 12, 16 and the respective rocker arm 14, 14' to rotate the rocker arm 14, 14'. A valve spring 10, 10' is arranged around the stem 7a, 9a of the intake/exhaust valve 7, 9. The spring force of the spring 10, 10' urges the valve 7, 9 toward the closed position, which is shown in figure 2. In the closed position, a valve disc 7b, 9b of the valve 7, 9 is placed against a valve seat surface. The valve seat surface can be part of a separate valve seat insert, which is arranged in the cylinder head 2.

A prechamber arrangement 15 is arranged in the cylinder head 2. The prechamber arrangement 15 comprises a prechamber 17, which is in fluid communication with the combustion chamber 5 via nozzle holes 18. The prechamber arrangement 15 comprises a prechamber valve 19, by which the feeding of fuel from a fuel chamber 25 into the prechamber 17 is controlled. The fuel chamber 25 is connected to a fuel duct, which supplies gaseous fuel into the fuel chamber 25. In addition to the fuel, the fuel duct could also supply combustion air to the prechamber 17. The prechamber arrangement 15 further comprises a spark plug 20, by which the mixture of fuel and air in the prechamber 17 is ignited. The prechamber arrangement 15 can be arranged inside a separate body, whereby it can be installed into the cylinder head 2 as one unit.

The prechamber valve 19 comprises an elongated valve stem 21, the first end of which is provided with a valve disc 22 and the second end with a first piston 23. The first piston 23 is placed within a first chamber 27. The first chamber 27 is a cylindrical chamber inside the cylinder head 2. The first piston 23 comprises a piston surface 31 delimiting the first chamber 27. The valve stem 21 is surrounded by a spring 24, which exerts a closing force on the prechamber valve 19, i.e. forces the prechamber valve 19 toward the closed position in which the valve disc 22 is against a valve seat. Instead of the spring 24, the closing force could be exerted on the prechamber valve 19, for instance, pneumatically. When the prechamber valve 19 is in the closed position, the flow of fuel from the fuel chamber 25 to the prechamber 17 is prevented. When there is a gap between the valve seat and the valve disc 22, the prechamber valve 19 is open, whereby the fuel is allowed to flow from the fuel chamber 25 to the prechamber 17.

The first chamber 27 is in fluid communication via a connecting duct 26 with a second chamber 28, which encloses a second piston 29. The second chamber 28 has a first end, from which the second piston 29 protrudes into the second chamber 28, and a second end. The connecting duct 26 is connected to the second end of the second chamber 28. The movable second piston 29 is provided with a piston surface 32 which delimits the second chamber 28. Both the first chamber 27 and the second chamber 28 are filled with pressure medium, preferably with lubrication oil of the engine. The area of the piston surface 32 of the second piston 29 is larger than the area of the piston surface 31 of the first piston 23. The prechamber arrangement 15 comprises a duct 30 extending from the side wall of the second chamber 28 to an oil space 36, for instance to a lubrication oil channel in the cylinder head 2. The first end of the duct 30 is provided with an opening 30a, through which fluid can enter the duct 30 from the second chamber 28. The opening 30a is arranged at such a height in the second chamber 28 that when the second piston 29 is at the first end of the second chamber 28, the opening 30a is not covered by the second piston 29. When the second piston 29 is at a predetermined distance from the first end, the second piston covers the opening 30a. The yoke 13 in connection with the intake valve 7 is also in operational connection with the second piston 29 so that the yoke 13 presses simultaneously both the intake valve 7 and the second piston 29. Thus, the movement of both the prechamber valve 19 and the intake valve 7 is provided by the same arrangement, i.e. by the actuating arrangement of the intake valve 7. The timing of the intake valve 7 is different from that of the prechamber valve 19, i.e. their opening and closing times differ from one another. Since the areas of the piston surfaces 31, 32 delimiting the first chamber 27 and the second chamber 28, respectively, are of different sizes, the movement speed and lift of the prechamber valve 19 and those of the intake valve 7 differ from one another.

In Figure 2 both the intake valve 7 and the exhaust valve 9 are closed, i.e. in their uppermost position against the valve seat surface in the cylinder head 2. Also the second piston 29 is in its uppermost position, whereby the volume of the second chamber 28 is at its largest. The opening 30a of the duct 30 in the side wall of the second chamber 28 is open, whereby the lubrication oil used as a pressure medium is allowed to flow via the duct 30 into the oil space 36.

When the intake valve 7 and the second piston 29 are pressed downwards by means of the actuating arrangement of the intake valve 7, i.e. by the yoke 13 and the rocker arm 14, the intake valve 7 starts to open. In the beginning of the movement of the second piston 29, the opening 30a of the duct 30 in the side wall of the second chamber 28 remains open. The second piston 29 projects into the second chamber 28 and pressure medium flows along the duct 30 into the oil space 36. Consequently, the total volume of the first chamber 27 and the second chamber 28 decreases. The prechamber valve 19 remains in the closed position, i.e. the valve disc 22 is against the valve seat surface.

When the intake valve 7 and the second piston 29 are pressed further downwards by means of the yoke 13 and the rocker arm 14, the intake valve 7 opens further and the second piston 29 projects deeper into the second chamber 28. When the second piston 29 covers the opening 30a of the duct 30 opening to the side wall of the second chamber 28, pressure medium is no longer allowed to flow away from the first chamber 27 and the second chamber 28 via the duct 30. As the second piston 29 projects deeper into the second chamber 28, the pressure of the lubrication oil in the first chamber 27 and the second chamber 28 rises and the prechamber valve 19 starts to open, when the pressure force acting onto the piston surface 31 of the first piston 23 exceeds the closing force of the spring 24.

When the intake valve 7 and the second piston 29 are pressed further downwards by means of the yoke 13 and the rocker arm 14, the second piston 29 still covers the opening 30a of the duct 30. The second piston 29 projecting deeper into the second chamber 28 pushes pressure medium from the second chamber 28 via the connecting duct 26 into the first chamber 27. Consequently, the first piston 23 moves downwards in the first chamber 27 and compresses the spring 24, whereby the prechamber valve 19 opens and fuel flows from the fuel chamber 25 into the prechamber 17. Since the area of the piston surface 32 of the second piston 29 is smaller than the area of the piston surface 31 of the first piston 23, the movement of the prechamber valve 19 is slower and the lift is smaller in comparison to the movement of the second piston 29, intake valve 7 and yoke 13.

The movement, i.e. the lift, of the prechamber valve 19 as a function of time is smaller than the lift of the intake valve 7. The lift of the prechamber valve 19 relative to the lift of the intake valve 7 can be changed by changing the ratio between the piston surface 31 of the first piston 23 and the piston surface 32 of the second piston 29. The moment when the prechamber valve 19 starts to open may be changed by changing the closing moment of the opening 30a of the duct 30 in the side wall of the second chamber 28, i.e. by changing for instance the position of the opening 30a of the duct 30 in the direction of motion of the second piston 29, i.e. in the vertical direction.

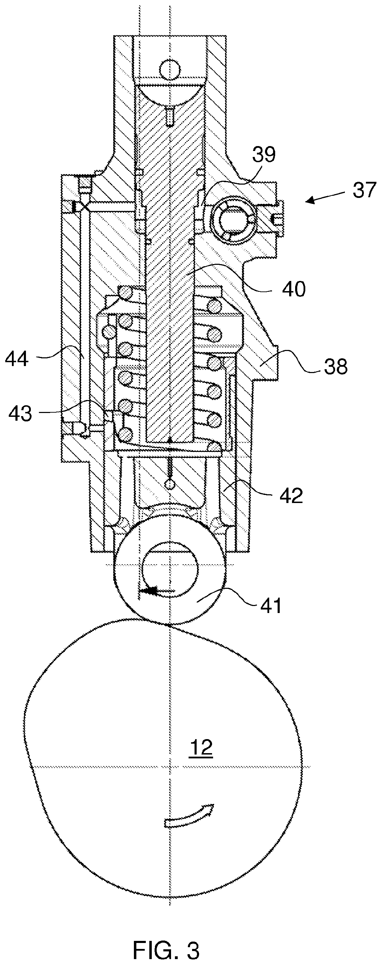

The engine 1 is provided with a variable intake valve control, such as the arrangement described in patent application WO 2011/004059 A1 or WO 2011/135162 A1. In the embodiment of the figures, a device 37 for delaying closing of the intake valve 7 is arranged between the cam 12 controlling the opening of the intake valve 7 and the respective rocker arm 14, as shown in figure 1. However, the device 37 for delaying the closing of the intake valve 7 could also be arranged between the rocker arm 14 and the intake valve 7. A similar device 38 can be arranged between the exhaust cam 16 and the rocker arm 14' opening the exhaust valve 9. An example of a suitable device 37 is shown in more detail in figure 3. The device 37 comprises a body part 38 and a chamber 39. A piston device 40 is arranged in the chamber 39. The piston device 40 is in force transmission connection with the intake valve 7 via the push rod 33 and the rocker arm 14. When a cam follower wheel 41 is engaged with the lobe of the intake cam 12, the piston device 40 is moved and the volume of the chamber 39 increases. If the closing of the intake valve 7 needs to be delayed, hydraulic fluid, such as lube oil of the engine, is introduced into the chamber 39 during the opening phase of the intake valve 7. As long as outflow from the chamber 39 is prevented, the piston device 40 is prevented from returning to its initial position and closing of the intake valve 7 is also prevented. Therefore, during the opening phase of the intake valve 7, the piston device 40 is in mechanical connection with the intake cam 12, but when the cam follower wheel 41 becomes engaged with the descending ramp of the lobe of the intake cam 12, the mechanical connection between the piston device 40 and the intake cam 12 can be cut. Thus, the closing timing and closing speed of the intake valve 7 is determined by the flow rate out of the chamber 39. When the delay function is not in use, the closing timing and speed of the intake valve 7 is determined by the shape of the intake cam 12. In the device of figure 3, the outflow is prevented by a guide element 42, which is connected to the cam follower wheel 41. The guide element 42 is provided with an aperture 43, and outflow from the chamber 39 is allowed when the aperture 43 becomes aligned with a fluid releasing duct 44, which is connected to the chamber 39. Instead of the guide element 42, the outflow from the chamber 39 could be controlled, for instance, by a control valve. Because the piston device 40 is in force transmission connection with the rocker arm 14 and the yoke 13, when the closing of the intake valve 7 is delayed, also the movement of the second piston 29, which pressurizes fluid for opening the prechamber valve 19, is affected.

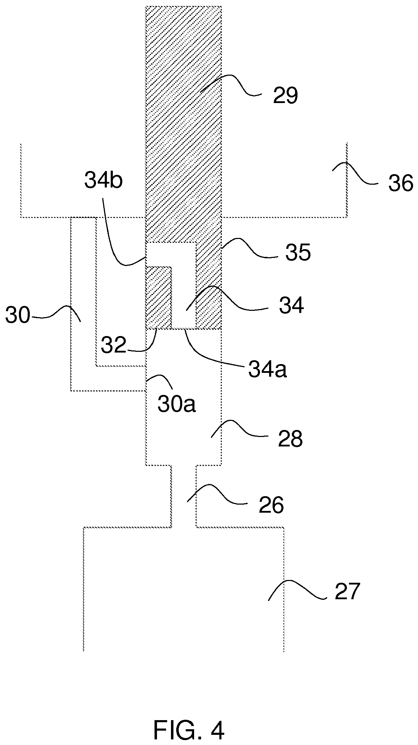

With the arrangement according to the invention, the effect of the delay of the intake valve closing on the closing of the prechamber valve 19 can be prevented. A part of a prechamber arrangement according to an embodiment of the invention is shown in figure 4. The pre-chamber arrangement is provided with a pressure releasing channel 34, which is configured to release pressure from the first chamber 27 when the second piston 29 is in a certain predetermined position for allowing closing of the prechamber valve 19. For instance, the pressure releasing channel 34 can be configured to release the pressure when the second piston 29 is at the second end of the second chamber 28, i.e. at the end of the pressurizing stroke. The pressure releasing channel 34 allows outflow from the first chamber 27 and the second chamber 28, and the spring 24 can thus close the prechamber valve 19. When the delay function of the intake valve closing is in use, the second piston 29 does not start its movement back to the initial position immediately after the pressurizing stroke, but the yoke 13 keeps the second piston 29 in the position, in which the volume of the second chamber 28 is minimized, i.e. at the second end of the second chamber 28. However, because of the pressure releasing channel 34, pressure can be released from the first chamber 27. When the pressure is released from the first chamber 27, and outflow from the first chamber 27 and the second chamber 28 is allowed, the spring 24 of the prechamber valve 19 can push the prechamber valve 19 to the closed position. The closing timing of the prechamber valve 19 is thus not dependent on the closing timing of the intake valve 7, but the closing movement can begin before the closing movement of the intake valve 7.

In the embodiment of figure 4, the pressure releasing channel 34 is arranged in the second piston 29. The pressure releasing channel 34 is inside the second piston and has a first end 34a and a second end 34b. The first end 34a opens onto the piston surface 32 of the second piston 29. The second end of the pressure releasing channel 34 opens onto the outer cylindrical surface of the second piston 29. When the second piston 29 is in its uppermost position, i.e. at a position where the prechamber valve 19 is closed, the second end 34b is covered by the wall of the second chamber 28. Flow through the pressure releasing channel 34 is thus prevented. During the pressurizing stroke of the second piston 29, for example at the end of the pressurizing stroke, the second end 34b of the pressure releasing channel 34 becomes aligned with the opening 30a of the duct 30. The pressure releasing channel 34 thus connects the second chamber 28 to the duct 30, which allows outflow from the second chamber 28 into the duct 30 and further into the oil space 36. Since the first chamber 27 is in fluid communication with the second chamber 28 via the connecting duct 26, pressure is released both from the first chamber 27 and the second chamber 28. This allows the first piston 23 to be pushed into the position, where the volume of the first chamber 27 is minimized and the prechamber valve 19 is closed. The closing speed of the prechamber valve 19 can be affected by the dimensioning of the pressure releasing channel 34. The closing speed of the prechamber valve 19 depends on the flow rate out of the first chamber 27 and the second chamber 28. A smaller diameter of the pressure releasing channel 34 thus leads to slower closing speed of the prechamber valve 19.

It is not necessary that the pressure releasing channel 34 is configured to release the pressure at the end of the pressurizing stroke of the second piston 29, but the pressure can be released even before the end of the stroke, if it is desired that the prechamber valve 19 reaches its full lift before the intake valve 7. Instead of the duct 30, the prechamber arrangement could be provided with another duct or opening for releasing pressure from the first chamber 27. Instead of being arranged inside the second piston 29, the pressure releasing channel could be, for instance, a groove that is arranged on the outer surface of the second piston 29. If different closing timings of the prechamber valve 19 are needed, the timing of the pressure release from the first chamber 27 could be adjustable. This could be implemented, for instance, by providing the prechamber arrangement with a rotatable second piston 29 and arranging the pressure releasing channel 34 on the outer surface of the second piston 29 at such an angle, that the moment when the pressure releasing channel 34 becomes aligned with an opening, through which the fluid is released, depends on the angular position of the second piston 29.

It will be appreciated by a person skilled in the art that the invention is not limited to the embodiments described above, but may vary within the scope of the appended claims.

## Claims

1. A prechamber arrangement for a piston engine (1), the arrangement comprising
- a prechamber (17),
- a prechamber valve (19) for opening and closing fluid communication between a fuel duct and the prechamber (17),
- a first chamber (27),
- a first piston (23), which is arranged in the first chamber (27) and comprises a piston surface (31) delimiting the first chamber (27), the first piston (23) being in mechanical connection with the prechamber valve (19) for moving the prechamber valve (19) in the opening direction of the valve (19) when hydraulic pressure is applied on the piston surface (31) of the first piston (23),
- a second piston (29), which is movable and comprises a piston surface (32) for pressurizing pressure medium and for applying the hydraulic pressure of the pressure medium on the piston surface (31) of the first piston (23), and
- a pressure releasing channel (34), which is configured to release pressure from the first chamber (27) for allowing closing of the prechamber valve (19) when the second piston (29) is in a certain predetermined position,
**characterized in that** the pressure releasing channel (34) is arranged in the second piston (29) and the pressure releasing channel (34) has a first end (34a) opening onto the piston surface (32) and a second end (34b) opening onto a cylindrical outer surface (35) of the second piston (29).

2. A prechamber arrangement according to claim 1, **characterized in that** the second piston (29) is arranged in a second chamber (28), which is in fluid communication with the first chamber (27), the second chamber (28) having a first end, from which the second piston (29) protrudes into the second chamber (28), and a second end.

3. A prechamber arrangement according to claim 2, **characterized in that** the prechamber arrangement is provided with a duct (30) having an opening (30a) in the wall of the second chamber (28) at such a location between the first end and the second end that the second piston (29) covers the opening (30a) at least when the piston (29) is at the second end of the second chamber (28).

4. A prechamber arrangement according to claim 3, **characterized in that** the opening (30a) is at such a distance from the first end that the opening (30a) is not covered by the second piston (29) when the piston (29) is at the first end of the second chamber (28).

5. A prechamber arrangement according to claim 3 or 4, **characterized in that** the pressure releasing channel (34) is configured to release the pressure from the first chamber (27) through the opening (30a) of the duct (30).

6. A prechamber arrangement according to any of the preceding claims, **characterized in that** the predetermined position of the second piston (29) differs from the position in which the pressure of the pressure medium begins to rise during the stroke that pressurizes the pressure medium.

7. A prechamber arrangement according to any of the preceding claims, **characterized in that** the pressure releasing channel (34) is configured to release the pressure from the first chamber (27) when the second piston (29) is at the end of the stroke that pressurizes the pressure medium.

8. A prechamber arrangement according to any of the preceding claims, **characterized in that** the arrangement comprises a cam (12) arranged on a camshaft (11) for controlling the movement of the second piston (29) at least in the moving direction, in which the pressure medium is pressurized.

9. A prechamber arrangement according to claim 8, **characterized in that** the movement of the second piston (29) in the pressurizing direction is controlled by the cam (12) that is used for controlling the opening of an intake valve (7) of the engine (1).

10. A prechamber arrangement according to any of the preceding claims, **characterized in that** the timing of the pressure release from the first chamber (27) is adjustable.

11. A piston engine (1) comprising a prechamber arrangement according to any of the preceding claims.

12. A piston engine (1) according to claim 11, **characterized in that** the engine (1) comprises a device (37) for delaying closing of an intake valve (7), which device (37) is arranged between an intake cam (12) and the intake valve (7).

## Patentansprüche

1. Vorkammeranordnung für einen Kolbenmotor (1), wobei die Anordnung Folgendes aufweist:
- eine Vorkammer (17),
- ein Vorkammerventil (19) zum Öffnen und Schließen der Fluidverbindung zwischen einem Kraftstoffkanal und der Vorkammer (17),
- eine erste Kammer (27),
- einen ersten Kolben (23), der in der ersten Kammer (27) angeordnet ist und eine Kolbenfläche (31) aufweist, die die erste Kammer (27) begrenzt, wobei der erste Kolben (23) in mechanischer Verbindung mit dem Vorkammerventil (19) steht, um das Vorkammerventil (19) in der Öffnungsrichtung des Ventils (19) zu bewegen, wenn Hydraulikdruck an der Kolbenfläche (31) des ersten Kolbens (23) angelegt wird,
- einen zweiten Kolben (29), der bewegbar ist und eine Kolbenfläche (32) aufweist, um ein Druckmedium mit Druck zu beaufschlagen und um den Hydraulikdruck des Druckmediums an der Kolbenfläche (31) des ersten Kolbens (23) anzulegen, und
- einen Druckablasskanal (34), der dazu ausgelegt ist, Druck aus der ersten Kammer (27) abzulassen, um Schließen des Vorkammerventils (19) zu gestatten, wenn sich der zweite Kolben (29) in einer gewissen vorbestimmten Position befindet, **dadurch gekennzeichnet, dass** der Druckablasskanal (34) in dem zweiten Kolben (29) angeordnet ist und der Druckablasskanal (34) ein erstes Ende (34a), das sich zu der Kolbenfläche (32) öffnet, und ein zweites Ende (34b), das sich zu einer zylinderförmigen Außenfläche (35) des zweiten Kolbens (29) öffnet, aufweist.

2. Vorkammeranordnung nach Anspruch 1, **dadurch gekennzeichnet, dass** der zweite Kolben (29) in einer zweiten Kammer (28) angeordnet ist, die sich in Fluidverbindung mit der ersten Kammer (27) befindet, wobei die zweite Kammer (28) ein erstes Ende, von dem der zweite Kolben (29) in die zweite Kammer (28) vorsteht, und ein zweites Ende aufweist.

3. Vorkammeranordnung nach Anspruch 2, **dadurch gekennzeichnet, dass** die Vorkammeranordnung mit einem Kanal (30) versehen ist, der eine Öffnung (30a) in der Wand der zweiten Kammer (28) derart an einer Stelle zwischen dem ersten Ende und dem zweiten Ende aufweist, dass der zweite Kolben (29) die Öffnung (30a) zumindest dann bedeck, wenn sich der Kolben (29) an dem zweiten Ende der zweiten Kammer (28) befindet.

4. Vorkammeranordnung nach Anspruch 3, **dadurch gekennzeichnet, dass** die Öffnung (30a) derart von dem ersten Ende beabstandet ist, dass die Öffnung (30a) nicht von dem zweiten Kolben (29) bedeckt wird, wenn sich der Kolben (29) an dem ersten Ende der zweiten Kammer (28) befindet.

5. Vorkammeranordnung nach Anspruch 3 oder 4, **dadurch gekennzeichnet, dass** der Druckablasskanal (34) dazu ausgelegt ist, den Druck durch die Öffnung (30a) des Kanals (30) aus der ersten Kammer (27) abzulassen.

6. Vorkammeranordnung nach einem der vorhergehenden Ansprüche, **dadurch gekennzeichnet, dass** sich die vorbestimmte Position des zweiten Kolbens (29) von der Position, an der der Druck des Druckmediums während des Hubs, der das Druckmedium mit Druck beaufschlagt, zu steigen beginnt, unterscheidet.

7. Vorkammeranordnung nach einem der vorhergehenden Ansprüche, **dadurch gekennzeichnet, dass** der Druckablasskanal (34) dazu ausgelegt ist, den Druck aus der ersten Kammer (27) abzulassen, wenn sich der zweite Kolben (29) am Ende des Hubs, der das Druckmedium mit Druck beaufschlagt, befindet.

8. Vorkammeranordnung nach einem der vorhergehenden Ansprüche, **dadurch gekennzeichnet, dass** die Anordnung einen Nocken (12), der an einer Nockenwelle (11) angeordnet ist, aufweist, um die Bewegung des zweiten Kolbens (29) zumindest in der Bewegungsrichtung, in der das Druckmedium mit Druck beaufschlagt wird, zu steuern.

9. Vorkammeranordnung nach Anspruch 8, **dadurch gekennzeichnet, dass** die Bewegung des zweiten Kolbens (29) in der Druckbeaufschlagungsrichtung mittels des Nockens (12), der zum Steuern des Öffnens eines Ansaugventils (7) des Motors (1) verwendet wird, gesteuert wird.

10. Vorkammeranordnung nach einem der vorhergehenden Ansprüche, **dadurch gekennzeichnet, dass** der Zeitpunkt des Druckablassens aus der ersten Kammer (27) einstellbar ist.

11. Kolbenmotor (1), der eine Vorkammeranordnung gemäß einem der vorhergehenden Ansprüche aufweist.

12. Kolbenmotor (1) nach Anspruch 11, **dadurch gekennzeichnet, dass** der Motor (1) eine Vorrichtung (37) zum Verzögern des Schließens eines Ansaugventils (7) aufweist, wobei die Vorrichtung (37) zwischen einem Einlassnocken (12) und dem Ansaugventil (7) angeordnet ist.

## Revendications

1. Ensemble de préchambre pour un moteur à piston (1), l'ensemble comprenant :
- une préchambre (17),
- une soupape de préchambre (19) pour ouvrir et fermer la communication fluidique entre un conduit de carburant et la préchambre (17),
- une première chambre (27),
- un premier piston (23) disposé dans la première chambre (27) et comprenant une surface de piston (31) délimitant la première chambre (27), le premier piston (23) étant relié mécaniquement à la soupape de préchambre (19) pour déplacer la soupape de préchambre (19) dans la direction d'ouverture de la soupape (19) lorsqu'une pression hydraulique est appliquée sur la surface de piston (31) du premier piston (23),
- un deuxième piston (29) déplaçable et comprenant une surface de piston (32) pour mettre sous pression un fluide de pression et pour appliquer la pression hydraulique du fluide de pression sur la surface de piston (31) du premier piston (23), et
- un canal de relâchement de pression (34) configuré pour relâcher la pression dans la première chambre (27) pour permettre la fermeture de la soupape de préchambre (19) lorsque le deuxième piston (29) se trouve dans une certaine position prédéterminée,
**caractérisé en ce que** le canal de relâchement de pression (34) est disposé dans le deuxième piston (29) et le canal de relâchement de pression (34) possède une première extrémité (34a) débouchant sur la surface de piston (32) et une deuxième extrémité (34b) débouchant sur une surface extérieure cylindrique (35) du deuxième piston (29).

2. Ensemble de préchambre selon la revendication 1, **caractérisé en ce que** le deuxième piston (29) est disposé dans une deuxième chambre (28), laquelle est en communication fluidique avec la première chambre (27), la deuxième chambre (28) possédant une première extrémité à partir de laquelle le deuxième piston (29) fait saillie dans la deuxième chambre (28), et une deuxième extrémité.

3. Ensemble de préchambre selon la revendication 2, **caractérisé en ce que** l'ensemble de préchambre est pourvu d'un conduit (30) comportant une ouverture (30a) dans la paroi de la deuxième chambre (28) à un tel endroit entre la première extrémité et la deuxième extrémité, que le deuxième piston (29) recouvre l'ouverture (30a) au moins lorsque le piston (29) se trouve à la deuxième extrémité de la deuxième chambre (28) .

4. Ensemble de préchambre selon la revendication 3, **caractérisé en ce que** l'ouverture (30a) est à une telle distance de la première extrémité, que l'ouverture (30a) n'est pas recouverte par le deuxième piston (29) lorsque le piston (29) se trouve à la première extrémité de la deuxième chambre (28).

5. Ensemble de préchambre selon la revendication 3 ou 4, **caractérisé en ce que** le canal de relâchement de pression (34) est configuré pour relâcher la pression dans la première chambre (27) à travers l'ouverture (30a) du conduit (30).

6. Ensemble de préchambre selon l'une quelconque des revendications précédentes, **caractérisé en ce que** la position prédéterminée du deuxième piston (29) est différente de la position dans laquelle la pression du fluide de pression commence à augmenter pendant le levage mettant sous pression le fluide de pression.

7. Ensemble de préchambre selon l'une quelconque des revendications précédentes, **caractérisé en ce que** le canal de relâchement de pression (34) est configuré pour relâcher la pression de la première chambre (27) lorsque le deuxième piston (29) est à la fin du levage mettant sous pression le fluide de pression.

8. Ensemble de préchambre selon l'une quelconque des revendications précédentes, **caractérisé en ce que** l'ensemble comprend une came (12) disposée sur un arbre à came (11) pour commander le déplacement du deuxième piston (29) au moins dans la direction de déplacement, dans laquelle le fluide de pression est mis sous pression.

9. Ensemble de préchambre selon la revendication 8, **caractérisé en ce que** le déplacement du deuxième piston (29) dans la direction de mise sous pression est commandé par la came (12) utilisée pour commander l'ouverture d'une soupape d'admission (7) du moteur (1) .

10. Ensemble de préchambre selon l'une quelconque des revendications précédentes, **caractérisé en ce que** le moment du relâchement de pression dans la première chambre (27) est réglable.

11. Moteur à piston (1) comprenant un ensemble de préchambre selon l'une quelconque des revendications précédentes.

12. Moteur à piston (1) selon la revendication 11, **caractérisé en ce que** le moteur (1) comprend un dispositif (37) destiné à retarder la fermeture d'une soupape d'admission (7), ledit dispositif (37) étant disposé entre une came d'admission (12) et la soupape d'admission (7).
